(19) **Europäisches Patentamt / European Patent Office / Office européen des brevets**

(11) **EP 1 772 747 B1**

(12) **EUROPEAN PATENT SPECIFICATION**

(45) Date of publication and mention
of the grant of the patent:
**10.08.2016 Bulletin 2016/32**

(51) Int Cl.:
*G01S 13/87* (2006.01)     *G01S 13/86* (2006.01)
*G01S 13/72* (2006.01)

(21) Application number: **05109355.7**

(22) Date of filing: **07.10.2005**

(54) **Method and arrangement for processing data**

Verfahren und Anordnung zur Datenfusion

Procédé et arrangement pour le traitement de données

(84) Designated Contracting States:
**AT BE BG CH CY CZ DE DK EE ES FI FR GB GR
HU IE IS IT LI LT LU LV MC NL PL PT RO SE SI
SK TR**

(43) Date of publication of application:
**11.04.2007 Bulletin 2007/15**

(73) Proprietor: **SAAB AB**
**581 88 Linköping (SE)**

(72) Inventors:
• **Notstrand, Jaokim**
**583 34 Linköping (SE)**
• **Samuelsson, Ulf**
**542 08 Linköping (SE)**
• **Axelsson, Leif**
**589 35 Linköping (SE)**

(74) Representative: **Zacco Sweden AB**
**P.O. Box 5581**
**114 85 Stockholm (SE)**

(56) References cited:
**US-A1- 2005 001 759**

• **BRUDER S ET AL: "A NN type multi-sensor
tracking and identification algorithm" CIRCUITS
AND SYSTEMS, 1993., PROCEEDINGS OF THE
36TH MIDWEST SYMPOSIUM ON DETROIT, MI,
USA 16-18 AUG. 1993, NEW YORK, NY, USA,IEEE,
16 August 1993 (1993-08-16), pages 492-495,
XP010119729 ISBN: 0-7803-1760-2**
• **GAD A ET AL: "Data fusion architecture for
maritime surveillance" INFORMATION FUSION,
2002. PROCEEDINGS OF THE FIFTH
INTERNATIONAL CONFERENCE ON JULY 8-11,
2002, PISCATAWAY, NJ, USA,IEEE, vol. 1, 8 July
2002 (2002-07-08), pages 448-455, XP010595155
ISBN: 0-9721844-1-4**
• **DAVID L. HALL, JAMES LLINAS: "An Introduction
to Multisensor Data Fusion" PROCEEDINGS OF
THE IEEE, vol. 85, no. 1, January 1997 (1997-01),
pages 6-23, XP011043797**
• **VALIN P ET AL: "Position and attribute fusion of
radar, ESM, IFF and Datalink for AAW missions
of the Canadian Patrol Frigate" MULTISENSOR
FUSION AND INTEGRATION FOR INTELLIGENT
SYSTEMS, 1996. IEEE/SICE/RSJ
INTERNATIONAL CONFERENCE ON
WASHINGTON, DC, USA 8-11 DEC. 1996, NEW
YORK, NY, USA,IEEE, US, 8 December 1996
(1996-12-08), pages 63-71, XP010206368 ISBN:
0-7803-3700-X**

## Description

### Field of the invention

The invention relates in general to an arrangement or system for improving data association accuracy, wherein the data is generated by different sensors onboard a platform.

The invention also relates to a method for improving data association accuracy.

Furthermore, the invention relates to software adapted to perform a method for improving data association accuracy when executed on a computer.

### Background of the invention

Today, platforms such as airplanes, helicopters and unpiloted aircraft are provided with a number of different sensors each having unique characteristics.

A radar unit provided on a platform is arranged to measure a distance between an object and the platform with a relatively high accuracy; the object is typically another platform such as an airplane. The radar unit is also arranged to measure a solid angle to the object relative to the platform with a relatively high accuracy. Furthermore, modem radar units are arranged to generate identity data comprising information about the detected object, in particular the type of platform, e.g. type of airplane. One way to perform this is to detect motor tones of the object so as to match the tones with data stored in a database, hopefully resulting in an identification of the object.

Contemporary platforms are often also provided with a radar warning unit. A distance from the platform to the object can only be measured with inexactitude by means of the radar warning unit. The same applies to measurements of a solid angle to the object relative to the platform. Furthermore, radar warning systems are arranged to identify the sending radar's transmitter type by performing a matching procedure in compliance with the above.

By virtue of the fact that platforms are provided with different sensors which measure different characteristics with varying confidence, associations of measured data representing different objects involve erroneous matching and fusion. This may have disastrous consequences within the avionic field if, for example, a faulty picture of a surrounding of a platform is presented for the pilot of the platform or a control tower on the ground.

### Summary

One object of the invention is to improve association confidence of data representing at least one object provided in the surroundings of a platform.

Another object of the invention is to improve association of data representing objects provided in the surroundings of a platform, wherein the data is generated by different sensors onboard the platform.

Yet another object of the invention is to facilitate association of objects detected by a radar unit and a radar warning unit, respectively.

Yet another object of the invention is to provide a more robust data association process and potentially a faster calculation process.

The invention is defined by the appended claims.

Advantageously the arrangement provides a more reliable association process because of the separate gating of at least one setup of kinematics data entities or identity data entities. This provides the positive effect of avoiding erroneous association of rather simple cases where association architectures according to prior art result in faulty associations.

By using separate gating of at least one setup of kinematics data entities or identity data entities the association process requires less computational time, while the gating already has reduced the number of possible association combinations.

A surprising benefit of the separate gating processes is that improved target data information is provided to an operator of the platform, which in military applications could be vital.

The method according to the invention is particularly advantageous if a large number of objects are detected by the sensors. Since large distance matrixes imply heavy calculation loads the separated gating processes provides a great reduction of elements to be associated.

Further, the method and arrangement according to the invention provides prerequisites for autonomy for unmanned platforms, because more reliable data is necessary in case an operator is not provided to make decisions.

### Brief description of the drawings

For a more complete understanding of the present invention and further objects and advantages thereof, reference is now made to the following description of examples - as shown in the accompanying drawings, in which:

Figure 1 schematically illustrates a platform 100, according to an embodiment of the invention.

Figure 2 schematically illustrates an association architecture, according to a first embodiment of the invention.

Figure 3a schematically illustrates an association architecture, according to a second embodiment of the invention.

Figure 3b schematically illustrates an association architecture, according to a third embodiment of the invention.

Figure 4 a schematically illustrates a matrix comprising data, according to an aspect of the invention.

Figure 4b schematically illustrates a matrix comprising data, according to an aspect of the invention.

Figure 4c schematically illustrates a matrix comprising data, according to an aspect of the invention.

Figure 5a schematically illustrates a method for associating data, according to an aspect of the invention.

Figure 5b schematically illustrates a method for associating data in greater detail, according to an aspect of the invention.

Figure 5c schematically illustrates a method for associating data, according to an aspect of the invention.

Figure 6 schematically illustrates an apparatus according to an aspect of present invention.

**Detailed description of the drawings**

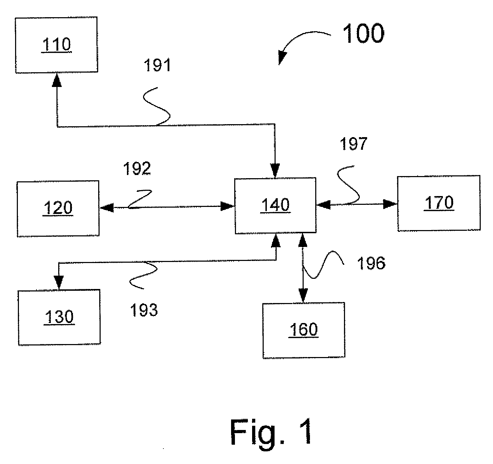

Figure 1 schematically illustrates components housed in a platform 100, such as an airplane, Unmanned Aerial Vehicle (UAV), or helicopter. Alternatively, the platform can be a watercraft, such as a motor boat, or a ground vehicle, e.g. an automobile.

The platform 100 comprises a control unit 140 arranged for communication with a first sensor 110 via a first data link 191. The control unit is also arranged for communication with a second sensor 120 via a second data link 192. The control unit is also arranged for communication with a third sensor 130 via a third data link 193. The control unit 140 is arranged to control the first, second and third sensors 110, 120, 130.

The first sensor 110 is a radar unit, also referred to as RR, arranged to communicate detected data to the control unit 140. The second sensor 120 is a radar warning receiver, also referred to as RWR, arranged to communicate detected data to the control unit 140. The third sensor 130 is an infrared (IR) camera arranged to communicate image data or film sequence data to the control unit 140. Other additional sensor units can be used and the invention is not limited to the three different sensors depicted herein. Alternatively, the third sensor can be, for example, a laser device adapted for measuring a distance to an object from the platform 100. Alternatively, the third sensor can be a light detection device or a sound detection device.

The object can be another platform, such as an airplane, UAV or helicopter. The object can also be a missile, robot or grenade.

It should be noted that an arbitrary number of different sensors can be used in pairs or in combination according to the invention.

The control unit 140 is arranged for communication with a database 170 via a data base link 197. The control unit 140 is arranged for communication with an I/O-unit 160 via an I/O link 196. In an alternative setup the control unit 140 comprises the database 170.

The database 170 is arranged to store a library comprising profiles of a variety of different platforms. The profiles comprise information about characteristics of the different platforms, e.g. engine type, radar type and corresponding features, such as number of rotors in the engine. The control unit 140 is arranged to perform matching procedures between data generated by any of the first, second and/or third sensor and profile data pre-stored in the database 170 so as to identify the type and status of an object represented by the generated data.

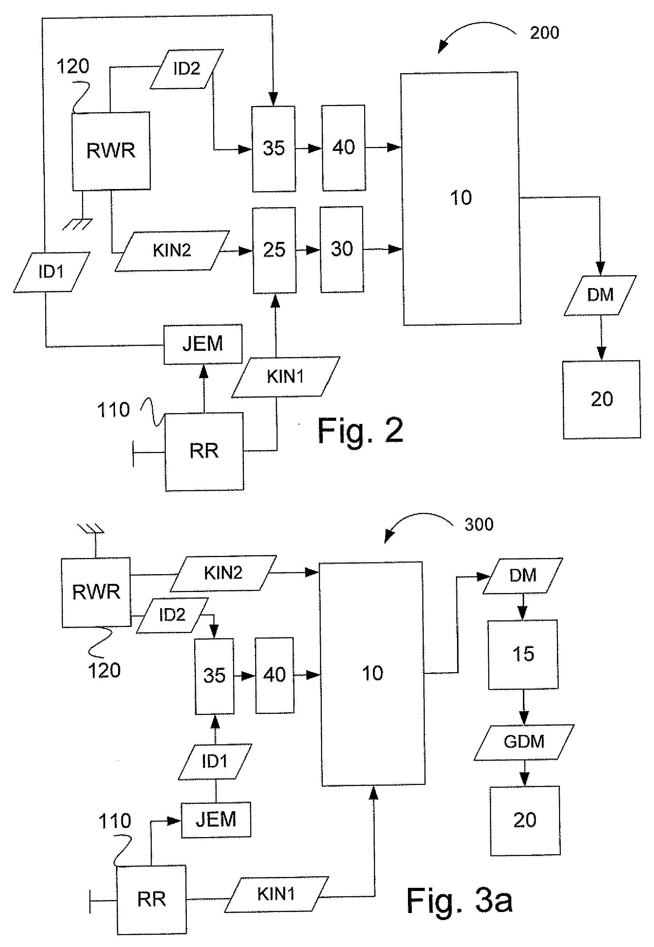

Figure 2 schematically illustrates an association architecture 200 according to an embodiment of the invention, wherein the radar sensor 110 is arranged to generate a first kinematics data entity KIN1 and a first identity data entity ID1. The radar sensor 110 is provided with a jet engine modulator JEM being arranged to generate a part of the first identity data entity ID 1. For purposes of illustration the JEM is shown separately from the radar unit 110 (RR). The first kinematics data entity KIN1 and a first identity data entity ID1 are described in further detail hereinafter.

The radar warning sensor 120 (RWR) is arranged to generate a second kinematics data entity KIN2 and a second identity data entity ID2. The second kinematics data entity KIN2 and the second identity data entity ID2 are described in further detail hereinafter.

An identity distance matrix generating process 35 is applied to generate an identity distance matrix IDM comprising the first and second identity data entities ID1 and ID2.

A kinematics distance matrix generating process 25 is applied to generate a kinematics distance matrix KINM comprising the first and second kinematics data entities KIN1 and KIN2.

Subsequently, an identity data gate 40 and a kinematics data gate 30 are applied to the generated identity distance matrix IDM and the kinematics distance matrix KINM, respectively, according to the structure shown in figure 2.

The gated identity distance matrix GIDM and the gated kinematics distance matrix GKINM are then processed in a distance matrix generating process 10 which is adapted to generate a combined distance matrix DM comprising elements of combined data achieved from the gates 30 and 40. According to one embodiment the gated kinematics distance matrix GKINM and the gated identity distance matrix GIDM are added so as to result in the distance matrix DM.

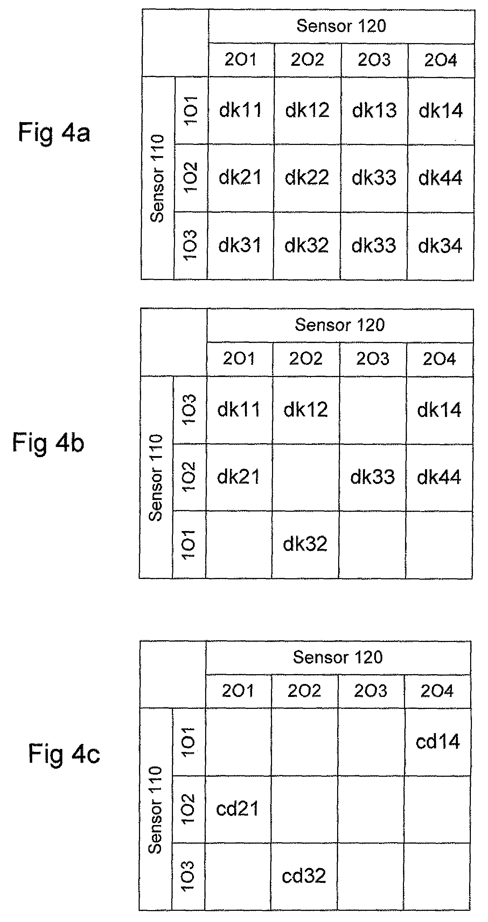

In a process step 20 the generated distance matrix DM is subjected to an association procedure. The result of subjecting the distance matrix DM to the association procedure is a final match between objects detected by the sensors 110 and 120. This is illustrated in greater detail with reference to figs. 4a-4c.

Figure 3a schematically illustrates an alternative association architecture 300, according to a second embodiment of the invention. Units, identity data, kinematics data and processes are substantially identical as depicted with reference to Figure 2. However, an alternative arrangement is provided as compared to Figure 2. The first identity data entity ID1 and the second identity data entity ID2 are first subjected to the identity distance matrix generating process 35 so as to generate the identity distance matrix IDM2. Subsequently, the generated identity distance matrix IDM is subjected to the identity data gate 40 resulting in a gated identity matrix GIDM.

The first and second kinematics data KIN 1 and KIN2 are directly supplied to the combined distance matrix generating process 10, wherein the distance matrix generating process 10 is adapted to generate a distance matrix DM comprising elements of combined data of both identity data achieved from the process 40, and kinematics data KIN1 and KIN2 provided by the radar unit 110 and the radar warning unit 120, respectively.

The generated distance matrix DM is then subjected to the general gate process 15. Subsequently the gated distance matrix DM is subjected to the association process 20.

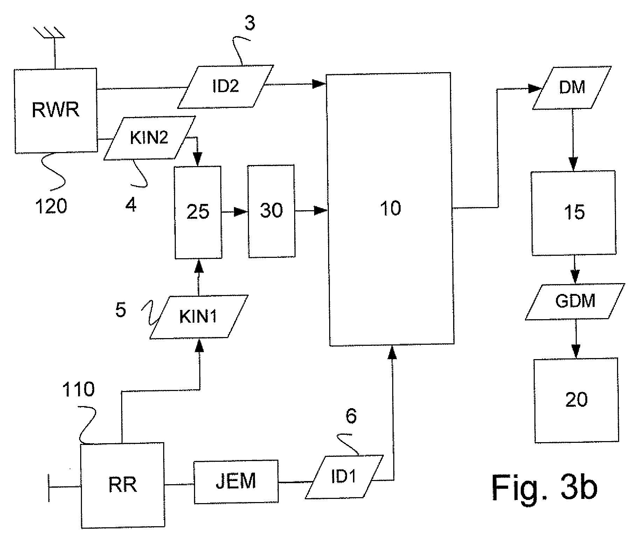

Figure 3b depicts a third embodiment of the present invention which has substantially the same association architecture as depicted with reference to Fig. 3 a. However, in this embodiment the first and second kinematics data entities KIN1 and KIN2 are first subjected to the kinematics distance matrix generating process 25 followed by the kinematics distance gating process 30.

The first and second identity data entities ID 1 and ID2 are provided to the distance matrix generating process 10 from the radar unit 110 and the radar warning unit 120, respectively. The distance matrix generating process 10 is arranged to generate a combined distance matrix DM depending on the generated kinematics data matrix GKINM and the first and second identity data entities ID1 and ID2.

The generated distance matrix DM is then subjected to the general gating process 15. The gating process 15 is adapted to generate a gated distance matrix GDM. Subsequently, the gated distance matrix GDM is subjected to the association process 20.

Figure 4a schematically illustrates a generated kinematics distance matrix KINM according to an embodiment of the invention.

According to thisembodiment, two sensors are used and only kinematics data is dealt with. This matrix structure is applicable to other sets of data, such as identity data or identity data combined with kinematics data. The first sensor 110 generates a first kinematics data entity KIN1 comprising information about the spatial positions of three different objects denoted first object 101, second object 102 and third object 103.

The second sensor 120 generates a second kinematics data entity KIN2 comprising information about spatial positions of four different objects denoted first object 201, second object 202, third object 203 and fourth object 204.

Alternatively or in addition, the first and second kinematics data entities KIN1 and KIN2 can comprise information, for example, speed, velocity, and/or acceleration/retardation information.

The sensors of the platform have different accuracies which are considered in computations according to the invention.

Example 1, calculation of dk11

Position coordinates in 3D of an object 101 are defined as $P_{1O1} = P_{1O1}(x_{1O1}, y_{1O1}, z_{1O1})$ and generated by the first sensor 110. The sensor is also arranged to determine confidence $C_{1O1}$ of the position coordinates $P_{1O1}$.

Position coordinates in 3D of an object 201 are defined as $P_{2O1} = P_{2O1}(x_{2O1}, y_{2O1}, z_{2O1})$ and generated by the second sensor 120. The sensor is also arranged to determine the confidence of the position coordinates $P_{2O1}$.

$$dk11 = f(C_{1O1\text{-}1O2}, P_{1O1}, P_{2O1}), \text{ wherein f is a function, and wherein } C_{1O1\text{-}1O2} \text{ is a factor of}$$

wherein f is a function, and wherein $C_{1O1\text{-}1O2}$ is a factor of confidence generated depending on $C_{1O1}$ and $C_{2O1}$. dk11 is considered to be $\chi^2$ distributed, which is important in gating procedures according to an aspect of the invention.

Another definition of dk11 is

$$dk11 = (P_{1O1} - P_{2O1})^T (K_{1O1} + K_{2O1})(P_{1O1} - P_{2O1}),$$

where $K_{1O1}$ and $K_{2O1}$ are covariance matrixes of $P_{1O1}$ and $P_{2O1}$, respectively.

The other elements of the matrix KINM are generated in a similar way. It should be noted that this example is for illustrative purposes only. More sophisticated models are used in real applications and are known in the art, but are not described in further detail herein.

Identity data generated by any of the sensors 110, 120 and/or 130 may be of various forms. Identity data is preferably represented by numerical values corresponding to unique identity parameters.

Example 2, determination of did11

Similarly to the embodiment described above in example 1, instead of position coordinates, identity data can be determined using the identity data matrix IDM which comprises elements did11-did34. This matrix is not shown.

The first and second sensors 110 and 120 are arranged to generate identity data units which are matched against identity data pre-stored in the database 170. A numerical value is generated depending on each matching procedure.

Similar to the procedure detailed in example 1, the element did11 is defined as a difference ("distance") between the detected data corresponding to a first object relative to the first sensor 110 and detected data corresponding to a first object relative to the second sensor 120. did11 is thus a numerical value indicating a level of mutual resemblance between the objects 101 and 201, with a certain confidence. A low value may indicate that the two objects in fact are identical.

Example 3, elements of a combined distance matrix DM

Elements cd11-cd34 (not shown) of a combined distance matrix DM are, according to a preferred embodiment, defined as:

$$cd11 = dk11 + did11$$

Figure 4b schematically illustrates the matrix with reference to figure 4a, wherein the matrix has been subjected to the gating process 25. The gating process 25 is substantially a filtering process adapted to set element values dk11-dk34 to "void" if they are larger than a predetermined threshold value TH. This means that an element dk11-dk34 which is lower than the predetermined threshold value TH is considered to constitute a possible match of two objects detected by different sensors, i.e. the difference between detected data representing parameters of the two objects is small enough to contain the possibility that the two detected objects are in fact the same object.

In this example, the elements dk13, dk22, dk31, dk33 and dk34 are values greater than the threshold value TH, the result is that the gating process sets the elements dk13, dk22, dk31 dk33 and dk34 equal to "void". It should be noted that, in general, the smaller the value TH is, the more elements are set to "void". This implicitly allows a faster and easier matching procedure of detected objects. However, with a low preset threshold value tolerances decrease, meaning that erroneous matching may increase. The threshold value TH should be set to a desired value, for example, taking into account risk analysis of erroneous matching. The threshold value TH should be tuned in accordance with reported sensor accuracy.

Figure 4c schematically illustrates an associated distance matrix ADM. The associated distance matrix ADM is the distance matrix DM after being subjected to the association process 20. The association process 20 is adapted to generate a final match of detected objects.

As shown in the matrix, cd14, cd21 and cd32 are the resulting association of objects detected by two different sensors 110 and 120. The first object 101 detected by the first sensor 110 and the fourth object 204 detected by the second sensor 120 are associated, meaning that they are considered to be the same object. Further, the second object 102 detected by the first sensor 110 and the first object 201 detected by the second sensor 120 are associated, meaning that they are considered to be the same object. Likewise, the third object 103 detected by the first sensor 110 and the second object 202 detected by the second sensor 120 are associated, meaning that they are considered to be the same object.

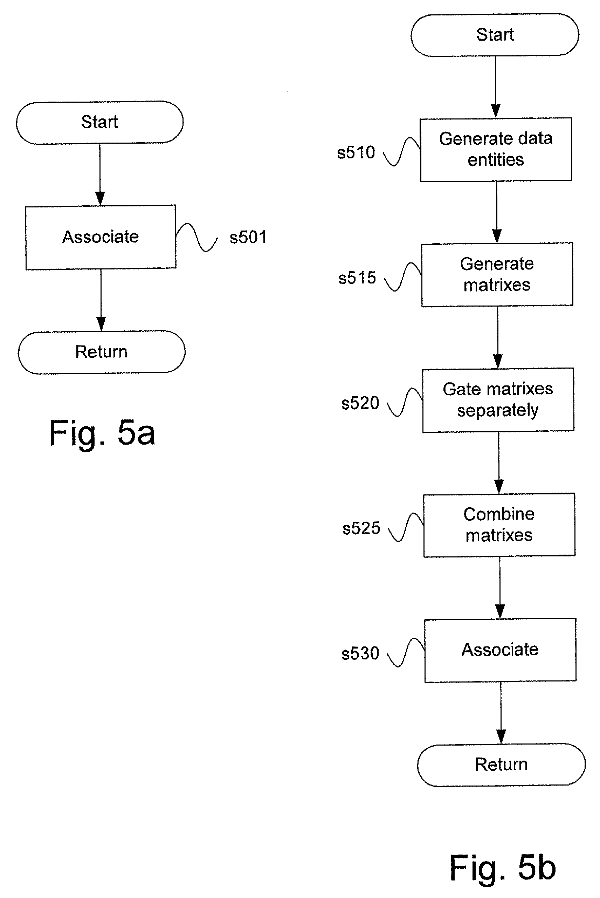

Figure 5a schematically illustrates a flowchart depicting a method for improving association accuracy of data, for example kinematics data or identity data, generated by different sensors provided on a platform and being arranged to detect and/or register said data having various qualities, wherein said method comprises the step of:

- generating a first data entity comprising a first information set and second information set about at least one object; and
- generating a second data entity comprising a first information set and a second information set about at least one object;

wherein the method is characterized by

- generating at least one distance matrix using the first information sets or the second information sets;
- gating said at least one generated distance matrix; and
- performing an association process depending upon the gated distance matrix.

Preferably the method comprises the step of:

- generating a combined distance matrix based upon the gated distance matrix.

Preferably the method comprises the step of:

- generating a first distance matrix comprising the first information sets and a second distance matrix comprising the second information sets.

Preferably the method comprises the step of:

- performing an association process depending on the generated combined distance matrix or generated distance matrixes.

Preferably one of the first information set or the second information set comprises kinematics data about the at least one object.

Preferably one of the first information set or the second information set comprises identity data about the at least one object.

Preferably the method comprises the step of:

- gating the generated distance matrixes separately.

Preferably the method comprises the step of:

- generating the first data entity and the second data entity continuously for performing the association process in real time.

Preferably the method comprises the step of:

- displaying and/or storing a result of the association process.

Figure 5b schematically illustrates a flowchart depicting a method for improving association of data representing at least one object detected by different sensors provided on a platform in greater detail, according to an embodiment of the invention.

In a first method step s510 identity data entities ID1, ID2 and kinematics data entities KIN1, KIN2 are generated. After the method step s510 a next method step s515 is performed.

In method step s515 an identity data matrix IDM is generated depending upon said identity data entities ID 1, ID2. Further, a kinematics distance matrix KTNM is generated depending upon said kinematics data KIN1, KIN2 After the method step s515 a next method step s520 is performed.

In method step s520 the identity distance matrix IDM and the kinematics distance matrix KINM are gated separately by two different independent gates. After the method step s520 a next method step s525 is performed.

In method step s525 the two gated matrixes, referred to as GIDM and GKINM, are combined to one distance matrix DM. After the method step s525 a next method step s530 is performed.

In method step s530 the distance matrix DM is subjected to an association process resulting in a final match of the at least one object detected by the different sensors. After the method step s530 the method ends.

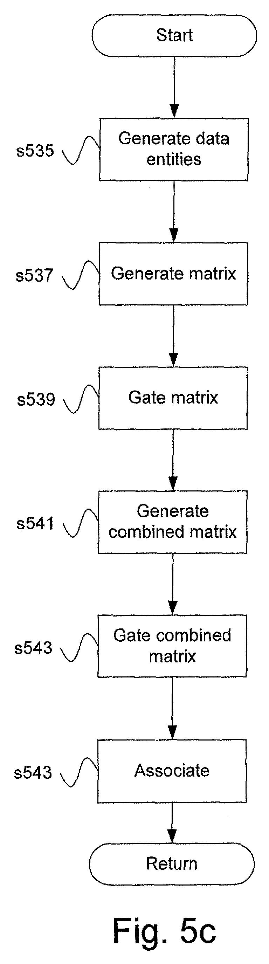

Figure 5c schematically illustrates a flowchart depicting a method for improving association of data representing at least one object detected by different sensors provided on a platform in greater detail, according to an embodiment of the invention.

In a first method step s535 identity data entities ID1, ID2 and kinematics data entities KIN1, KIN2 are generated. After the method step s535 a next method step s537 is performed.

In method step s537 an identity distance matrix IDM is generated depending upon said identity data entities ID1, ID2. After the method step s537 a next method step s539 is performed.

In method step s539 the identity distance matrix IDM is gated by a unique gate. After the method step s539 a next method step s541 is performed.

In method step s541 kinematics data KIN1, KIN2 is provided to the gated identity data matrix, referred to as GIDM, resulting in a combined distance matrix DM. After the method step s541 a next method step s543 is performed.

In method step s541 the distance matrix DM is subjected to an association process resulting in a final match of the at least one object detected by the different sensors. After the method step s541 the method ends.

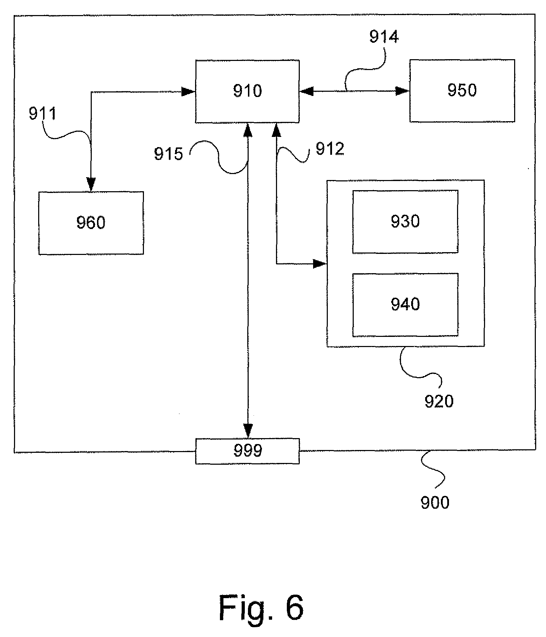

With reference to Figure 6, a diagram of one embodiment of an apparatus 900 is shown. The above-mentioned computer 530 or a monitoring device (not shown) may include apparatus 900. Apparatus 900 comprises a non-volatile memory 920, a data processing device 910 and a read/write memory 950. Non-volatile memory 920 has a first memory portion 930 wherein a computer program, such as an operating system, is stored for controlling the function of apparatus 900. Further, apparatus 900 comprises a bus controller, a serial communication port, I/O-means, an A/D-converter, a time date entry and transmission unit, an event counter and an interrupt controller (not shown). Non-volatile memory 920 also has a second memory portion 940.

A computer program according to an aspect of the invention is provided, wherein the program comprises routines for carrying out processing of data, for example kinematics data or identity data, generated by different sensors provided on a platform and being arranged to detect and/or register said data having various quality. The program may be stored in an executable manner or in a compressed state in a separate memory 960 and/or in read/write memory 950.

Data processing device 910 may be, for example, a microprocessor.

When it is described that data processing device 910 performs a certain function it should be understood that data processing device 910 performs a certain part of the program which is stored in separate memory 960, or a certain part of the program which is stored in read/write memory 950.

Data processing device 910 may communicate with a data port 999 by means of a data bus 915. Non-volatile memory 920 is adapted for communication with data processing device 910 via a data bus 912. Separate memory 960 is adapted to communicate with data processing device 910 via a data bus 911. Read/write memory 950 is adapted to communicate with data processing device 910 via a data bus 914.

When data is received on data port 999 it is temporarily stored in second memory portion 940. When the received input data has been temporarily stored, data processing device 910 is set up to perform execution of code in a manner described above. According to one embodiment, data received on data port 999 comprises information such as KIN1, KIN2, ID1 and ID2. This information can be used by apparatus 900 for improving association accuracy of data according to the invention.

Parts of the methods described herein can be performed by apparatus 900 by means of data processing device 910 running the program stored in separate memory 960 or read/write memory 950. When apparatus 900 runs the program, parts of the methods described herein are executed.

An aspect of the invention relates to a computer programme comprising a programme code for performing the method steps depicted with reference to Figs. 5a-c, when the computer programme is run on a computer.

An aspect of the invention relates to a computer programme product comprising a program code stored on computer-readable media for performing the method steps depicted with reference to Figs. 5a-c, when the computer programme is run on the computer.

An aspect of the invention relates to a computer programme product directly storable in an internal memory of a computer, comprising a computer programme for performing the method steps depicted with reference to Figs. 5a-c, when the computer programme is run on the computer.

**Claims**

1. Method for increasing data association accuracy, comprising the steps of

- generating a first kinematics data entity (KIN1) and a first identity data entity (ID1) about at least one object; and
- generating a second kinematics data entity (KIN2) and a second identity data entity (ID2) about at least one object,
- generating at least one distance matrix using the kinematics data entities (KIN1, KIN2) or the identity data entities (ID1, ID2); and
- gating said at least one generated distance matrix;

**characterized by**

- generating the first kinematics data entity (KIN1) and the first identity data entity (ID1), and the second kinematics data entity (KIN2) and the second identity data entity (ID2), by different types of sensors, respectively;
- generating a combined distance matrix based upon

a first gated generated distance matrix comprising the kinematics data entities (KIN1, KIN2) and
a second gated generated distance matrix comprising the identity data entities (ID1, ID2), or

generating a gated combined distance matrix based upon

the first gated generated distance matrix comprising the kinematics data entities (KIN1, KIN2), and
the identity data entities (ID1, ID2) or

based upon

the second gated generated distance matrix comprising the identity data entities (ID1, ID2), and
the kinematics data entities (KIN1, KIN2); and

- performing an association process depending upon the generated combined distance matrix or the generated gated combined distance matrix.

2. Method according to claim 1, **characterized by**

- gating the generated distance matrixes separately.

3. Method according to any of claims 1-3, **characterized by**

- generating the first data entity and the second data entity continuously for performing the association process in real time.

4. Method according to any of claims 1-4, **characterized by**

- displaying and/or storing a result of the association process.

5. Arrangement, suitable for increasing data association accuracy, comprising
means for generating a first kinematics data entity (KIN1) and a first identity data entity (ID1) about at least one object; and
means for generating a second kinematics data entity (KIN2) and a second identity data entity (ID2) about at least one object,
means for generating at least one distance matrix depending upon the kinematics data entities (KIN1, KIN2) or the identity data entities (ID1, ID2); and
means for gating said at least one generated distance matrix;
**characterized by**
the first kinematics data entity (KIN1) and the first identity data entity (ID1), and the second kinematics data entity (KIN2) and the second identity data entity (ID2), being generated by means of different types of sensors, respectively;
means for generating a combined distance matrix based upon

a first gated generated distance matrix comprising the kinematics data entities (KIN1, KIN2) and
a second gated generated distance matrix comprising the identity data entities (ID1, ID2), or

means for generating a gated combined distance matrix based upon

the first gated generated distance matrix comprising the kinematics data entities (KIN1, KIN2), and
the identity data entities (ID1, ID2) or

based upon

the second gated generated distance matrix comprising the identity data entities (ID1, ID2), and the kinematics data entities (KIN1, KIN2); and

means for performing an association process depending upon the generated combined distance matrix or the generated gated combined distance matrix.

6. Arrangement according to claim 5, **characterized by** means for gating the generated distance matrixes separately.

7. Platform, such as an airplane, helicopter or unmanned craft, comprising an arrangement according to any of claims 5-6.

8. Computer programme comprising a programme code for performing the method steps depicted with reference to any of claims 1-4, when the computer programme is run on a computer.

9. Computer programme product comprising a program code stored on computer-readable media for performing the method steps depicted with reference to any of claims 1-4, when the computer programme is run on the computer.

10. Computer programme product directly storable in an internal memory of a computer, comprising a computer programme for performing the method steps depicted with reference to any of claims 1-4, when the computer programme is run on the computer.


**Patentansprüche**

1. Verfahren zur Erhöhung der Datenassoziierungsgenauigkeit mit den Schritten

- Erzeugen einer ersten kinematischen Dateneinheit (KIN1) und einer ersten Identitätsdateneinheit (ID1) für mindestens ein Objekt; und
- Erzeugen einer zweiten kinematischen Dateneinheit (KIN2) und einer zweiten Identitätsdateneinheit (ID2) für mindestens ein Objekt,
- Erzeugen mindestens einer Abstandsmatrix unter Anwendung der kinematischen Dateneinheit (KIN1, KIN2) oder der Identitätsdateneinheit (ID1, ID2); und
- Ausführen einer Werteausblendung in der mindestens einen erzeugten Abstandsmatrix;

**gekennzeichnet durch**

- Erzeugen der ersten kinematischen Dateneinheit (KIN1) und der ersten Identitätsdateneinheit (ID1) und der zweiten kinematischen Dateneinheit (KIN2) und der zweiten Identitätsdateneinheit (ID2) jeweils **durch** unterschiedliche Arten von Sensoren;
- Erzeugen einer kombinierten Abstandsmatrix auf der Grundlage

einer ersten, einer Werteausblendung unterzogenen Abstandsmatrix, die die kinematischen Dateneinheiten (KIN1, KIN2) enthält und
einer zweiten, einer Werteausblendung unterzogenen, erzeugten Abstandsmatrix, die die Identitätsdateneinheiten (ID1, ID2) enthält, oder

- Erzeugen einer einer Werteausblendung unterzogenen kombinierten Abstandsmatrix auf der Grundlage

der ersten, einer Werteausblendung unterzogenen, erzeugten Abstandsmatrix, die die kinematischen Dateneinheiten (KIN1, KIN2) enthält, und
den Identitätsdateneinheiten (ID1, ID2) oder

auf der Grundlage
der zweiten, einer Werteausblendung unterzogenen, erzeugten Abstandsmatrix, die die Identitätsdateneinheiten (ID1, ID2) enthält, und
der kinematischen Dateneinheiten (KIN1, KIN2); und
- Ausführen eines Assoziierungsprozesses abhängig von der erzeugten kombinierten Abstandsmatrix oder der erzeugten, einer Werteausblendung unterzogenen, kombinierten Abstandsmatrix.

2. Verfahren nach Anspruch 1, **gekennzeichnet durch**

- getrenntes Ausführen einer Werteausblendung an dem erzeugten Abstandsmatrizen.

3. Verfahren nach einem der Ansprüche 1-3, **gekennzeichnet durch**

- kontinuierliches Erzeugen der ersten Dateneinheit und der zweiten Dateneinheit zur Ausführung des Assoziierungsprozesses in Echtzeit.

4. Verfahren nach einem der Ansprüche 1-4, **gekennzeichnet durch**

- Anzeigen und/oder Speichern eines Ergebnisses des Assoziierungsprozesses.

5. Anordnung, die zur Erhöhung der Datenassoziierungsgenauigkeit geeignet ist, mit
einer Einrichtung zur Erzeugung einer ersten kinetischen Dateneinheit (KIN1) und einer ersten Identitätsdateneinheit (ID1) für mindestens ein Objekt; und
einer Einrichtung zur Erzeugung einer zweiten kinematischen Dateneinheit (KIN2) und einer zweiten Identitätsdateneinheit (ID2) für mindestens ein Objekt,
einer Einrichtung zur Erzeugung mindestens einer Abstandsmatrix in Abhängigkeit von den kinematischen Dateneinheiten (KIN1, KIN2) oder den Identitätsdateneinheiten (ID1, ID2); und
einer Einrichtung zur Durchführung einer Werteausblendung in der mindestens einen erzeugten Abstandsmatrix;
**dadurch gekennzeichnet, dass**
die erste kinematische Dateneinheit (KIN1) und die erste Identitätsdateneinheit (ID1) und die zweite kinematische Dateneinheit (KIN2) und die zweite Identitätsdateneinheit (ID2) jeweils durch unterschiedliche Arten von Sensoren erzeugt sind;
eine Einrichtung vorgesehen ist zur Erzeugung einer kombinierten Abstandsmatrix auf der Grundlage

einer ersten, einer Werteausblendung unterzogenen, erzeugten Abstandsmatrix, die die kinematischen Dateneinheiten (KIN1, KIN2) enthält und
einer zweiten, einer Werteausblendung unterzogenen, erzeugten Abstandsmatrix, die die Identitätsdateneinheiten (ID1, ID2) enthält, oder

eine Einrichtung vorgesehen ist zur Erzeugung einer einer Werteausblendung unterzogenen kombinierten Abstandsmatrix auf der Grundlage

der ersten, einer Werteausblendung unterzogenen, erzeugten Abstandsmatrix, die die kinematischen Dateneinheiten (KIN1, KIN2) enthält, und
der Identitätsdateneinheiten (ID1, ID2) oder

auf der Grundlage
der zweiten, einer Werteausblendung unterzogenen, erzeugten Abstandsmatrix, die die Identitätsdateneinheiten (ID1, ID2) enthält, und den kinematischen Dateneinheiten (KIN1, KIN2); und
eine Einrichtung vorgesehen ist zur Ausführung eines Assoziierungsprozesses in Abhängigkeit von der erzeugten kombinierten Abstandsmatrix oder der erzeugten, einer Werteausblendung unterzogenen, kombinierten Abstandsmatrix.

6. Anordnung nach Anspruch 5, **gekennzeichnet durch** eine Einrichtung zur getrennten Durchführung einer Werteausblendung an den erzeugten Abstandsmatrizen.

7. Plattform, etwa ein Flugzeug, ein Hubschrauber oder unbemanntes Fahrzeug, mit einer Anordnung nach einem der Ansprüche 5-6.

8. Computerprogramm mit einem Programm-Code zur Ausführung der Verfahrensschritte, die mit Bezug zu einem der Ansprüche 1-4 angegeben sind, wenn das Computerprogramm in einem Computer ausgeführt wird.

9. Computerprogrammprodukt mit einem Programm-Code, der auf computerlesbaren Medien gespeichert ist, zur Ausführung der Verfahrensschritte, die in einem der Ansprüche 1-4 angegeben sind, wenn das Computerprogramm in dem Computer ausgeführt wird.

10. Computerprogrammprodukt, das direkt in einem internen Speicher eines Computers speicherbar ist, mit einem Computerprogramm zur Ausführung der Verfahrensschritte, die in einem der Ansprüche 1-4 angegeben sind, wenn das Computerprogramm in dem Computer ausgeführt wird.

**Revendications**

1. Procédé pour augmenter la précision d'association de données, comprenant les étapes de

   - génération d'une première entité de données de cinématique (KIN1) et d'une première entité de données d'identité (ID1) sur au moins un objet ; et
   - génération d'une seconde entité de données de cinématique (KIN2) et d'une seconde entité de données d'identité (ID2) sur au moins un objet,
   - génération d'au moins une matrice de distance en utilisant les entités de données de cinématique (KIN1, KIN2) ou les entités de données d'identité (ID1, ID2) ; et
   - filtrage de ladite au moins une matrice de distance générée ;

   **caractérisé par**

   - la génération de la première entité de données de cinématique (KIN1) et de la première entité de données d'identité (ID1), et de la seconde entité de données de cinématique (KIN2) et de la seconde entité de données d'identité (ID2), par différents types de capteurs, respectivement ;
   - la génération d'une matrice de distance combinée sur la base d'une première matrice de distance générée filtrée comprenant les entités de données de cinématique (KIN1, KIN2) et
   d'une seconde matrice de distance générée filtrée comprenant les entités de données d'identité (ID1, ID2), ou la génération d'une matrice de distance combinée filtrée sur la base
   de la première matrice de distance générée filtrée comprenant les entités de données de cinématique (KIN1, KIN2), et
   des entités de données d'identité (ID1, ID2) ou sur la base
   de la seconde matrice de distance générée filtrée comprenant les entités de données d'identité (ID1, ID2), et
   des entités de données de cinématique (KIN1, KIN2) ; et
   - l'exécution d'un procédé d'association en fonction de la matrice de distance combinée générée ou de la matrice de distance combinée filtrée générée.

2. Procédé selon la revendication 1, **caractérisé par**

   - le filtrage, séparément, des matrices de distance générées.

3. Procédé selon l'une quelconque des revendications 1 à 3, **caractérisé par**

   - la génération de la première entité de données et de la seconde entité de données en continu pour effectuer le procédé d'association en temps réel.

4. Procédé selon l'une quelconque des revendications 1 à 4, **caractérisé par**

   - l'affichage et/ou le stockage d'un résultat du procédé d'association.

5. Arrangement, approprié pour augmenter la précision d'association de données, comprenant
   des moyens pour générer une première entité de données de cinématique (KIN1) et une première entité de données d'identité (ID1) sur au moins un objet ; et
   des moyens pour générer une seconde entité de données de cinématique (KIN2) et une seconde entité de données d'identité (ID2) sur au moins un objet,

des moyens pour générer au moins une matrice de distance en fonction des entités de données de cinématique (KIN1, KIN2) ou des entités de données d'identité (ID1, ID2) ; et

des moyens pour filtrer ladite au moins une matrice de distance générée ;

**caractérisé par**

la première entité de données de cinématique (KIN1) et la première entité de données d'identité (ID1), et la seconde entité de données de cinématique (KIN2) et la seconde entité de données d'identité (ID2), étant générées au moyen de différents types de capteurs, respectivement ;

des moyens pour générer une matrice de distance combinée sur la base

d'une première matrice de distance générée filtrée comprenant les entités de données de cinématique (KIN1, KIN2) et d'une seconde matrice de distance générée filtrée comprenant les entités de données d'identité (ID1, ID2), ou

des moyens pour générer une matrice de distance combinée filtrée sur la base

de la première matrice de distance générée filtrée comprenant les entités de données de cinématique (KIN1, KIN2), et des entités de données d'identité (ID1, ID2) ou sur la base

de la seconde matrice de distance générée filtrée comprenant les entités de données d'identité (ID1, ID2), et les entités de données de cinématique (KIN1, KIN2) ; et

des moyens pour exécuter un procédé d'association en fonction de la matrice de distance combinée générée ou de la matrice de distance combinée filtrée générée.

6. Arrangement selon la revendication 5, **caractérisé par** des moyens pour filtrer, séparément, les matrices de distance générées.

7. Plate-forme, comme un avion, un hélicoptère ou un engin sans pilote, comprenant un arrangement selon l'une quelconque des revendications 5 à 6.

8. Programme informatique comprenant un code de programme pour effectuer les étapes du procédé décrites en référence à l'une quelconque des revendications 1 à 4, lorsque le programme informatique est exécuté sur un ordinateur.

9. Produit de programme informatique comprenant un code de programme stocké sur un support lisible par ordinateur pour effectuer les étapes du procédé décrites en référence à l'une quelconque des revendications 1 à 4, lorsque le programme informatique est exécuté sur l'ordinateur.

10. Produit de programme informatique stockable directement dans une mémoire interne d'un ordinateur, comprenant un programme informatique pour effectuer les étapes du procédé décrites en référence à l'une quelconque des revendications 1 à 4, lorsque le programme informatique est exécuté sur l'ordinateur.

Fig. 1

Fig. 2

Fig. 3a

Fig. 3b

Fig 4a

| | | Sensor 120 | | | |
|---|---|---|---|---|---|
| | | 2O1 | 2O2 | 2O3 | 2O4 |
| Sensor 110 | 1O1 | dk11 | dk12 | dk13 | dk14 |
| | 1O2 | dk21 | dk22 | dk33 | dk44 |
| | 1O3 | dk31 | dk32 | dk33 | dk34 |

Fig 4b

| | | Sensor 120 | | | |
|---|---|---|---|---|---|
| | | 2O1 | 2O2 | 2O3 | 2O4 |
| Sensor 110 | 1O3 | dk11 | dk12 | | dk14 |
| | 1O2 | dk21 | | dk33 | dk44 |
| | 1O1 | | dk32 | | |

Fig 4c

| | | Sensor 120 | | | |
|---|---|---|---|---|---|
| | | 2O1 | 2O2 | 2O3 | 2O4 |
| Sensor 110 | 1O1 | | | | cd14 |
| | 1O2 | cd21 | | | |
| | 1O3 | | cd32 | | |

Start

Associate                s501

Return

# Fig. 5a

Start

s510    Generate data
        entities

s515    Generate
        matrixes

s520    Gate matrixes
        separately

s525    Combine
        matrixes

s530    Associate

Return

# Fig. 5b

```
                    ┌──────────────┐
                    │    Start     │
                    └──────┬───────┘
                           │
                           ▼
                    ┌──────────────┐
      s535   ⌇      │ Generate data│
                    │   entities   │
                    └──────┬───────┘
                           │
                           ▼
                    ┌──────────────┐
      s537   ⌇      │Generate matrix│
                    └──────┬───────┘
                           │
                           ▼
                    ┌──────────────┐
      s539   ⌇      │  Gate matrix │
                    └──────┬───────┘
                           │
                           ▼
                    ┌──────────────┐
      s541   ⌇      │   Generate   │
                    │combined matrix│
                    └──────┬───────┘
                           │
                           ▼
                    ┌──────────────┐
      s543   ⌇      │ Gate combined│
                    │    matrix    │
                    └──────┬───────┘
                           │
                           ▼
                    ┌──────────────┐
      s543   ⌇      │  Associate   │
                    └──────┬───────┘
                           │
                           ▼
                    ┌──────────────┐
                    │    Return    │
                    └──────────────┘
```

# Fig. 5c

Fig. 6